Europäisches Patentamt

European Patent Office

Office européen des brevets

(11) Publication number: **0 334 822**
A2

(12) # EUROPEAN PATENT APPLICATION

(21) Application number: **89830128.8**

(22) Date of filing: **23.03.89**

(51) Int. Cl.⁴: **B 60 P 3/34**

(30) Priority: **25.03.88 IT 4777288    25.03.88 IT 4777588**

(43) Date of publication of application:
**27.09.89   Bulletin  89/39**

(84) Designated Contracting States:
**AT BE CH DE ES FR GB GR LI LU NL SE**

(71) Applicant: **Bifulco, Vincenzo**
**Via Recipe**
**San Giuseppe Vesuviano (Napoli)  (IT)**

**Langella, Luigi**
**Via Recipe**
**San Giuseppe Vesuviano (Napoli)  (IT)**

(72) Inventor: **Bifulco, Vincenzo**
**Via Recipe**
**San Giuseppe Vesuviano (Napoli)  (IT)**

**Langella, Luigi**
**Via Recipe**
**San Giuseppe Vesuviano (Napoli)  (IT)**

(74) Representative: **Sneider, Massimo**
**Studio Lenzi Via Lucania 13**
**I-00187 Roma  (IT)**

(54) **A caravan, or similar vehicle, or a mobile home having a variable and/or enlargeable volume.**

㊗ This caravan, or similar vehicle, or mobile home having a variable and/or enlargeable volume is made up of a fixed main body and one or more additional elements hinged onto the fixed main body.

In the finished form, the additional elements are box-shaped, each one forming a parallelepiped, with frontal walls, both on the front and the back, placed at right angles to the vehicle's longitudinal axis, a side wall, a bottom wall forming the floor and a top wall forming the roof or covering of the body to which it is applied.

According to another possible version, some or all of the walls forming the frontal sides, both on the front and the back, the floor and the roof, are provided with hinged panels, folding into sections by means of horizontally or vertically placed hinges.

EP 0 334 822 A2

## Description

### A caravan, or similar vehicle, or a mobile home having a variable and/or enlargeable volume.

The need to be able to dispose of a large amount of inside space, when the vehicle is standing still, and of a minimum overall dimensions when the vehicle is in motion or is parked, is much appreciated in the case of particular vehicles, such as caravans, campers and the like.

Up to now this need has only partially been satisfied by adding onto the vehicles, when, standing still and in use, supplementary volumes such as tents and/or movable walls, fixed or fixable to the main body which, however, remains unchanged and constitutes the volume of the vehicle when it is in motion or parked.

The object of this invention is a vehicle, such as a caravan, a mobile home, or any similar vehicle, in which the inside volume may vary from a minimum size, when the vehicle is in motion and/or is not being used, to a maximum size, when the vehicle is standing still and in use.

This vehicle, caravan or mobile home, having a variable and/or enlargeable volume, according to the invention, is made up of a fixed main or basic body and moveable elements hinged onto the main body.

According to a first possible version, the moveable elements are box-shaped, each one rotating around a longitudinal axis placed according to an edge of the main body.

In this version, each rotatable box-shaped element, as also the fixed main body, is formed by a parallelepiped with frontal walls, both on the front and the back, i.e. walls placed at right angles to the longitudinal axis of the vehicle, with a side wall, a bottom wall forming the floor and a top wall forming the roof or covering of the body.

The main body may not possess one or both of the longitudinal side walls, i.e. those placed parallel to the advancement axis of the vehicle, according to the presence of either one or two of the additional box-shaped elements. The additional elements, instead, have a longitudinal wall which constitutes the outside wall of the vehicle when the inside space is being used.

According to another version which may be realized, some of the walls forming the sides, the floor and the roof of the vehicle may present hinged panels, which may fold themselves into sections by means of hinges placed horizontally or vertically.

A sensible use of these horizontal or vertical hinges allows the reduction of the external dimensions, when the vehicle is in motion and not being used, so that it complies with the maximum limits allowed and/or comfortable for use on the roads and, at the same time, so as to allow the enlargement of the inside space as desired, when it is standing still and being used inside.

This caravan, or similar vehicle, having a variable volume, according to this invention, will be better understood by reading the illustrative description which follows, with reference to the general plans enclosed in the appendix, which are:

Figure 1. Showing the general outline of a vehicle or mobile home with two additional box-shaped elements;

Figure 2. Showing the main body with an additional box-shaped element;

Figure 3. Showing a caravan, or mobile home, according to a second possible version of the inside; and

Figures 4 and 5. Showing further possible variations to Fig. 3, according to which some of the side walls, the roof and the floor are formed by one or more linked elements.

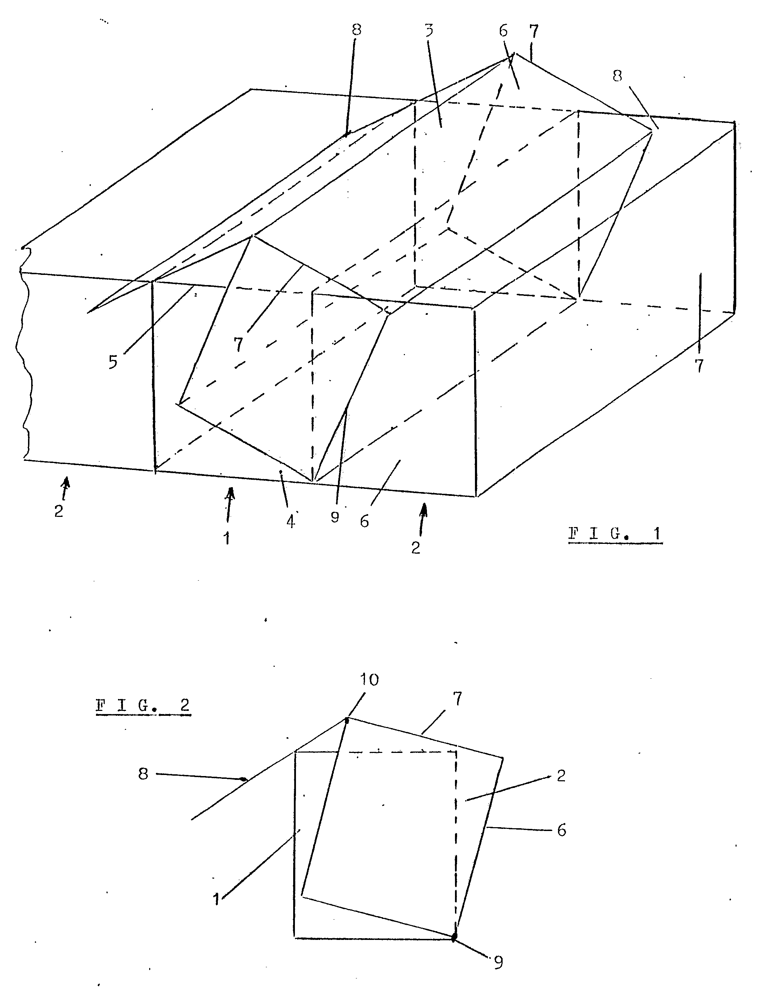

With reference to the aforementioned figure, and especially to figures 1 and 2, the vehicle or mobile home, having a variable or enlargeable volume, according to its first realization, is made up of a fixed main body, indicated by number 1, and of additional box-shaped elements, indicated by number 2. Figure 1 shows two additional elements 2, one for each longitudinal side of the fixed main body 1, in particular, one of the additional elements 2, exactly the one on the right hand side of the observer, is shown whilst it is being opened and when it is fully open.

As previously stated, the main body 1 has two frontal walls 3, one on the front and one on the back, considering the forward direction of the vehicle, a bottom wall 4, which is the floor, and a top wall 5, which is the roof or covering.

Likewise, each additional element 2 is made up of two frontal walls 6, both on the front and on the back, of a side wall 7 and by a wall 8 destined to form the roof of the rotating additional element, when this is used.

The fixed body 1 and each additional rotating element 2 are connected by means of hinges placed on the corresponding edges of the floor 4 of the fixed body 1 and of wall 9 of the additional element 2, which is destined to become the floor of the additional element itself. Following the rotation of the additional element 2 with respect to the fixed body 1, the side wall 7 of the former becomes the side wall of the vehicle, when it is standing still, whilst the wall 8 closes the top part of the space.

To be able to follow the movement of wall 7, during the rotation of the additional element 2 around its axis, wall 8, which is to become the roof, is connected to the adjoining wall 7 by means of one or more hinges which allow the necessary angular excursion during the aforementioned movement. This situation is especially clear in Fig. 2, which shows the cross-section of the walls of the fixed body 1 and of a box-shaped additional element 2. The drawing shows the rotation axis 11 around which the additional box-shaped element 2 rotates with respect to the fixed main body 1, and also the rotation axis 10 around which wall 8 rotates, with respect to wall 7, so as to be able to follow the latter wall during its opening or closing movements.

It has been stated that the fixed main body 1 is preferably without the longitudinal wall adjoining the additional element 2, as the latter's wall 9 serves as a side wall, once the vehicle is in motion.

The fixed main body, however, may have one or both the side walls, because they are formed by wall 9 of the additional box-shaped elements. These walls have openings to allow access to the vehicle.

Small feet to even up the additional element with the main body so that the floors are level have, of course, been planned, and sealing measures, to isolate the inside of the vehicle from the outside, when it is being used, have also been planned.

It must also be pointed out that, if desired, it is possible to add one or more additional elements on each side of the vehicle, with the result of increasing the available inside space during its use, whilst maintaining the overall dimensions of the vehicle or mobile home within the allowed limits, convenient for a smooth manoeuvrability of the vehicle itself.

In the modified version shown in Figure 3, the frontal sides, i.e. those parallel to the longitudinal axis of the vehicle, have been indicated with number 21, whilst the elements forming the floor and the roof have been indicated with 23 and 24, respectively.

According to this version, the frontal walls 21, both on the front and the back, have the elements or panels 25 and 26 hinged to each other by means of hinges such as 27 and 28, placed along a vertical axis. The panels 25 adjoining the frontal walls 21, both on the front and the back, are hinged, by means of hinges 29 and 30 placed along vertical axis, to the adjoining frontal wall.

The side wall 22, placed according to a plane parallel to the longitudinal axis of the vehicle, is also hinged, with the hinges placed vertically, to the free edges of panel 26, as in 32 and 33.

Panels 23 and 24 are also hinged to the edges of the walls forming the roof 31 and the floor, the respective hinges being placed horizontally.

From what has been previously stated, it is evident that, by pulling the side wall 22, as an effect of the vertical hinge connection between the various elements, it is possible to place panels 25 and 26 on the same plane, thus increasing the length of the front and back frontal walls 21. According to the resting position of the single panels, i.e. whether they are folded so as to be inside or outside panels 23 and 24, which are meant to constitute the roof and the floor, these last panels must be first lifted and then lowered, before or after their positioning or the packing of the frontal panels, both on the front and the back.

In the other modified version shown in Figure 4, the roof 23 and floor 24 have panels 34 and 35 hinged one to the other by means of hinges placed lengthwise, whilst the side walls 36 and 37 have panels similar to the panels 25 and 26 of the previous modified version but with a width equal to the height of panels 34 and 35, when extended.

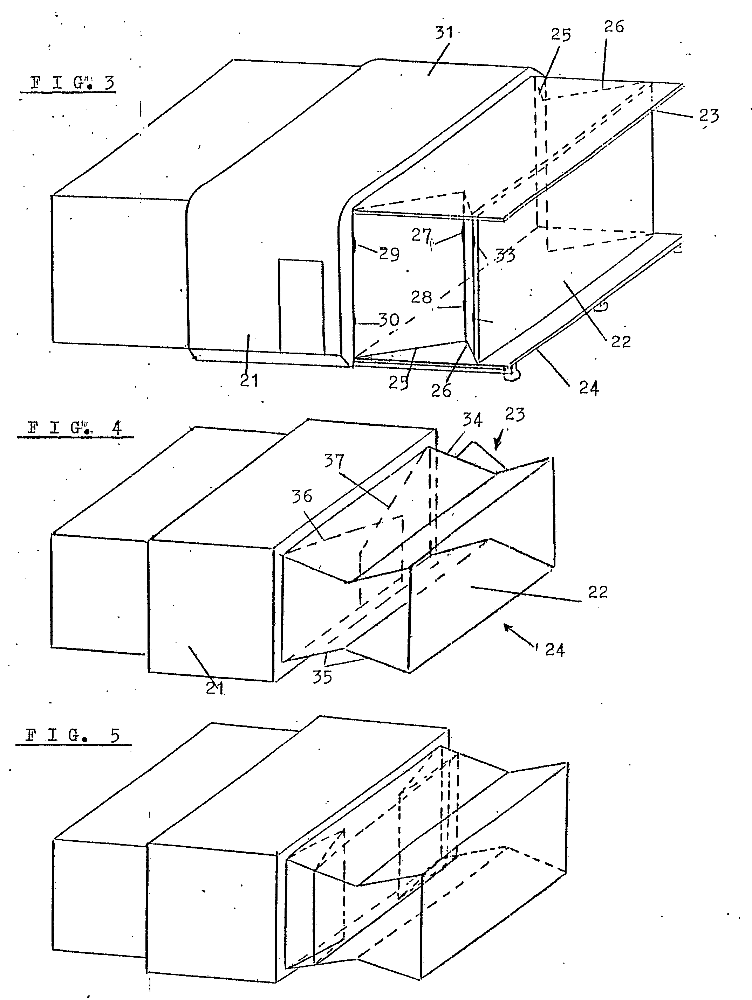

In the version shown in Figure 5, on the other hand, all the frontal walls, the roof and the floor have panels forming, when in use, extensions of the respective walls, thus allowing the enlargement of the useful space of the vehicle, caravan or mobile home.

When the panels are not being used they are folded one against the other so as to form a sort of package which fits into the space provided for the vehicle in motion.

Only two of the panels for each wall have been shown but, of course, they may be more, with the aim of achieving an extremely compact overall shape when the vehicle, caravan or mobile home is in movement, and the maximum of inside space for use when the vehicle is standing still.

Assistant means allowing a smooth manageability of the various elements will, of course, be provided, as also the necessary sealing measures to close all spaces between the panels, thus guaranteeing protection against the weather, in any moment. Other means, such as small adjustable feet, are also provided to keep the various elements forming the floor, and, consequently, all the set of panels forming the main body and the aditional elements, at the same level.

Lastly, it is worthwhile to point out that the fixed installations in the inside of the vehicle are preferably placed against the frontal and/or side walls, due to the fact that these are not subject to any movement, folding or rotation.

This vehicle, according to the invention, has been illustrated and described in a few of the versions in which it may be realized. Naturally, it may be subject to modifications and changes, within the possibilities set down in its technical equivalencies, without any modifications to the invention itself, as it appears from the previously stated claims.

## Claims

1. A caravan, or similar vehicle, or a mobile home having a variable and/or enlargeable volume characterized by a main fixed body (1,21) and by one or more additional elements (2,3,4,5; 22,23,24,25) hinged onto the fixed main body.

2. A caravan, or mobile home, according to claim 1 characterized by the fact that the movable elements (2) are made up of one or more box-shaped additional elements, each one rotating around a longitudinal axis of the main basic or fixed body (1) and each one formed, as also the main fixed body, by a parallelepiped with frontal walls (6), both on the front and the back, placed at right angles to the longitudinal axis of the vehicle or mobile home, with a bottom wall (9) forming the floor, a top wall (8) forming the roof or covering of the body to which it is applied and a side wall (7).

3. A caravan, or mobile home, according to claim 1, characterized by the fact that the main fixed body (1) and/or the additional box-shaped elements (2) may not possess the longitudinal side wall, placed parallel to the advancement axis of the vehicle, which may be found in connection with the additional box-shaped element (2) or forming the outside wall (7) of the vehicle when the inside space is enlargened.

4. A caravan, or mobile home, according to claim 2, characterized by the fact that the wall forming the roof (8) is hinged onto the adjoining edge of the side wall (7) by means of one or more hinges, allowing the necessary angular excursion during the rotation of the additional element.

5. A caravan, or mobile home, according to claim 1, characterized by the fact that the main fixed body (1) has one or both its side walls connected with the additional elements (2) which may, thus, be provided with entrance openings.

6. A caravan, or mobile home with a variable and/or enlargeable volume, according to claim 1, characterized by the fact that some or all of the walls forming the fixed main body (21), i.e. the sides (22), the floor (24), the roof (23), are provided with hinged panels, which may fold themselves into sections, by means of hinges placed both horizontally and vertically. A sensible use of these hinges, once the vehicle is standing still and fully in use, will allow the desired amount of enlargement.

7. A caravan, or mobile home, according to claim 6, characterized by the fact that the frontal walls (21), both on the front and the back, are provided with panels (25, 26; 35; 36, 37), having equal width and height, hinged to each other and to the aforementioned walls by means of hinges placed along a vertical axis, whilst the roof (23) and the pavement (24) are provided with elements hinged by means of hinges placed along a longitudinal, horizontal axis.

8. A caravan, or mobile home, according to claim 6, characterized by the fact that the frontal walls (21), the roof (23) and the pavement (24) are provided with prolonged panels, when in use, hinged onto the aforementioned walls, thus allowing, an enlargement of the space required, when the vehicle is standing still and which are placed as a pack, alongside the walls, when the vehicle is not being used.

F I G . 1

F I G . 2

FIG. 3

31  25  26

23

27  29  33

28

30

21  25  26  24  22

FIG. 4

34  23

37

36

22

35  24

21

FIG. 5